# FASCICULE DE BREVET EUROPEEN

(11) **EP 2 085 574 B1**
(45) Date de publication et mention de la délivrance du brevet: **01.12.2010**
(21) Numéro de dépôt: 08171281.2
(22) Date de dépôt: 11.12.2008
(51) Int. Cl.: F01D 5/08, F01D 25/12, F01D 25/28

(54) **Centrage d'une pièce à l'intérieur d'un arbre**
Zentrierung eines Bauteils im Innern einer Welle
Centring of a part inside a shaft

(30) Priorité: 23.01.2008 FR 0800331
(43) Date de publication de la demande: 05.08.2009
(73) Titulaire: Snecma, 75015 Paris (FR)
(72) Inventeur: Mons, Claude, Marcel, 77176 Savigny Le Temple (FR); Raberin, Laurent, 75005 Paris (FR); Rongvaux, Jean-Marc, 91290, La Norville (FR); Rousselin, Stéphane, 77850 Hericy (FR)
(74) Mandataire: Ramey, Daniel

(56) Documents cités:
- DE-A1- 10 210 954
- DE-A1- 19 617 539
- DE-A1- 19 757 945
- DE-A1-102004 059 188

## Description

La présente invention concerne un dispositif de centrage d'une pièce à l'intérieur d'un arbre, en particulier dans une turbomachine telle qu'un turboréacteur d'avion.

Dans les turboréacteurs à double flux, l'arbre de la turbine basse-pression est creux et peut contenir un tube, couramment appelé « tube center vent », destiné à la mise à l'air libre des paliers qui supportent le rotor basse pression, pour permettre l'évacuation d'un débit d'air chargé d'huile vers l'aval du turboréacteur.

En général, ce tube s'étend sur toute la longueur de l'arbre du rotor et ses extrémités sont solidarisées en rotation avec l'arbre.

Compte tenu de sa longueur importante et de la relative minceur de sa paroi, le tube est habituellement soutenu par une ou plusieurs bagues de centrage comprenant des moyens d'appui sur la paroi interne de l'arbre.

Cependant, l'arbre du compresseur basse-pression a en général un diamètre interne variable et présente des épaulements ou resserrements destinés à l'amélioration du comportement dynamique du turboréacteur.

Pour être mises en place à l'intérieur de l'arbre à distance des extrémités de ce dernier, les bagues de centrage doivent donc être en mesure de franchir ces épaulements ou resserrements de la surface interne de l'arbre.

Dans ce but, les bagues de centrage connues sont en général montées en force par des systèmes du type à vis et écarteurs, susceptibles d'entraîner des défauts de positionnement des bagues et d'abîmer la surface interne de l'arbre.

En outre, le montage de ces bagues nécessite un outillage spécifique relativement coûteux.

Par ailleurs, les bagues de centrage connues s'avèrent trop encombrantes pour pouvoir être utilisées dans les turboréacteurs de petite taille, ayant typiquement une soufflante de diamètre inférieur à quarante pouces, c'est-à-dire à un mètre environ.

Le document DE 10210954-A1 décrit un dispositif moteur comprenant une cage cylindrique fixe en rotation à l'intérieur de laquelle est monté un disque solidaire d'un arbre rotatif. La cage est portée par des rayons en matériau à mémoire de forme, dans lesquels on fait successivement passer un courant électrique pour les chauffer et les raccourcir, ce qui fait orbiter le disque à l'intérieur de la cage et entraîne en rotation l'arbre solidaire du disque.

L'invention a notamment pour but d'apporter une solution simple, économique et efficace aux problèmes précités, permettant d'éviter les inconvénients de la technique connue.

Elle a en particulier pour objet un dispositif de centrage d'une pièce, telle qu'un tube, à l'intérieur d'un arbre, dont la mise en place ne requiert pas d'outillage spécifique et ne risque pas d'endommager l'arbre, et qui puisse être utilisé dans les turboréacteurs de petite taille.

Elle propose à cet effet un dispositif de centrage d'une pièce à l'intérieur d'un arbre creux, en particulier dans une turbomachine, comprenant des moyens déformables interposés entre la pièce et l'arbre creux et comportant des organes d'appui sur la surface interne de l'arbre, ces organes d'appui étant susceptibles d'être écartés de la surface interne de l'arbre pour permettre leur déplacement à l'intérieur de l'arbre, **caractérisé en ce que** les moyens déformables sont réalisés, au moins partiellement, dans un matériau à mémoire de forme apte à se déformer pour appliquer les organes d'appui sur la surface interne de l'arbre ou les en écarter lorsque le matériau est soumis à une température prédéterminée.

Le dispositif selon l'invention peut passer, par un simple changement de température, d'une position de rétraction de ses organes d'appui, dans laquelle il présente un encombrement réduit autour de la pièce disposée à l'intérieur de l'arbre, à une position de déploiement des organes d'appui permettant le centrage de la pièce par rapport à la paroi interne de l'arbre.

Dans un premier mode de réalisation de l'invention, les moyens déformables sont préalablement conformés en position d'appui sur l'arbre sous une température supérieure à une température Tₜ de transition du matériau à mémoire de forme puis sont rétractés sous contrainte mécanique à une température inférieure à la température de transition Tₜ, pour être ensuite capables, par un effet mémoire de forme simple, d'appliquer les organes d'appui sur l'arbre par déformation du matériau à mémoire de forme lorsque celui-ci est chauffé à une température supérieure à la température de transition Tₜ.

Grâce à son faible encombrement radial en conformation de rétraction, le dispositif selon l'invention peut être inséré aisément à l'intérieur de l'arbre et franchir d'éventuels resserrements ou épaulements de sa paroi interne.

Une fois que le dispositif est en place, le déploiement de ses organes d'appui sur l'arbre pour le centrage de la pièce ne requiert qu'un simple chauffage, sans qu'aucun contact mécanique ne soit nécessaire avec le dispositif.

La température de transition Tₜ du matériau à mémoire de forme est de préférence supérieure à 100°C.

Une telle température de transition permet de minimiser les risques de déploiement intempestif du dispositif.

Dans un deuxième mode de réalisation de l'invention, les moyens déformables sont préalablement soumis à des cycles thermomécaniques dans lesquels ils sont tour à tour conformés en position de déploiement à une température supérieure à une température Tₜ de transition du matériau à mémoire de forme puis en position de rétraction sous une température inférieure à la température de transition Tₜ, pour être ensuite aptes à appliquer les organes d'appui sur l'arbre creux par déformation du matériau à mémoire de forme lorsque celui-ci est chauffé à une température supérieure à la température de transition Tₜ, et à rétracter les organes d'appui par déformation du matériau à mémoire de forme lorsque celui-ci est refroidi à une température inférieure à la température de transition Tₜ.

Ce deuxième mode de réalisation repose sur la mise en oeuvre d'un effet mémoire de forme double, nécessitant une phase d'éducation comprenant des cycles thermomécaniques, et autorisant à la fois la rétraction et le déploiement des organes d'appui par un simple changement de température, de manière à faciliter et à rendre plus sûr non seulement le montage du dispositif, mais aussi son démontage, par exemple pour des opérations de maintenance.

La température de transition Tₜ est de préférence comprise entre -90 et -50°C.

Une telle température de transition est inférieure aux températures usuelles de fonctionnement d'un avion, et permet ainsi d'éviter les rétractions intempestives du dispositif, tout en autorisant l'utilisation de moyens de refroidissement conventionnels, tels que de l'azote liquide par exemple.

La pièce peut être un tube, tel qu'un conduit d'aération, parfois appelé tube « center vent », destiné à la mise à l'air libre de paliers de support et de guidage de l'arbre.

Dans le premier mode de réalisation, les moyens déformables comprennent des tiges de matériau à mémoire de forme ayant une extrémité radialement interne fixée à la surface externe du tube et une extrémité radialement externe portant des patins d'appui sur la surface interne de l'arbre, l'extrémité radialement externe de chaque tige étant susceptible d'être recourbée radialement vers l'intérieur par déformation du matériau à mémoire de forme pour écarter de la surface interne de l'arbre le patin d'appui correspondant.

La structure de ce dispositif lui confère une grande légèreté, et permet l'utilisation de tiges en matériau à mémoire de forme qui sont relativement courantes sur le marché.

Avantageusement, chaque patin d'appui a une forme de secteur d'anneau apte à épouser la forme de la surface interne de l'arbre en position de déploiement, l'ensemble des patins d'appui formant, en position de rétraction, un anneau sensiblement continu entourant le tube.

Cette configuration permet d'optimiser les capacités de centrage du dispositif tout en minimisant son encombrement radial.

Dans le deuxième mode de réalisation, les moyens déformables comprennent une bague de matériau à mémoire de forme montée autour du tube, et capable de prendre une forme ovale ou polygonale par déformation du matériau à mémoire de forme, de sorte qu'une partie de sa surface interne soit en appui sur la surface externe du tube et qu'une partie de sa surface externe soit en appui sur la surface interne de l'arbre pour le centrage du tube.

La bague joue à la fois le rôle de moyen déformable et d'organe d'appui, de sorte que le dispositif s'avère particulièrement résistant à l'usure.

Dans un troisième mode de réalisation, les moyens déformables comprennent une bague montée autour du tube, et comportant des plaquettes en matériau à mémoire de forme réparties autour de la bague, chaque plaquette étant interposée entre la surface externe de la bague et un patin d'appui et étant capable de se fléchir en arc par déformation du matériau à mémoire de forme de sorte que des bords de la plaquette prennent appui sur la surface externe de la bague et qu'une partie médiane de la plaquette pousse le patin d'appui radialement vers l'extérieur contre la surface interne de l'arbre pour le centrage du tube.

Cette configuration permet de limiter la quantité de matériau à mémoire de forme utilisée, tout en ne nécessitant que des déformations géométriques simples, ce qui facilite grandement la phase d'éducation préalable du matériau à mémoire de forme.

Avantageusement, la bague comporte sur sa surface externe des parties creuses dans lesquelles reposent les plaquettes en matériau à mémoire de forme et les patins d'appui, ces derniers présentant de préférence une face radialement externe qui affleure la surface externe de la bague, en position de rétraction.

Cette configuration offre un encombrement radial minimal.

L'invention concerne également une turbomachine, telle qu'un turboréacteur d'avion, **caractérisée en ce qu**'elle comprend au moins un dispositif de centrage du type décrit ci-dessus.

L'invention sera mieux comprise et d'autres détails, avantages et caractéristiques de celle-ci apparaîtront plus clairement à la lecture de la description suivante faite à titre d'exemple non limitatif, en référence aux dessins annexés dans lesquels :

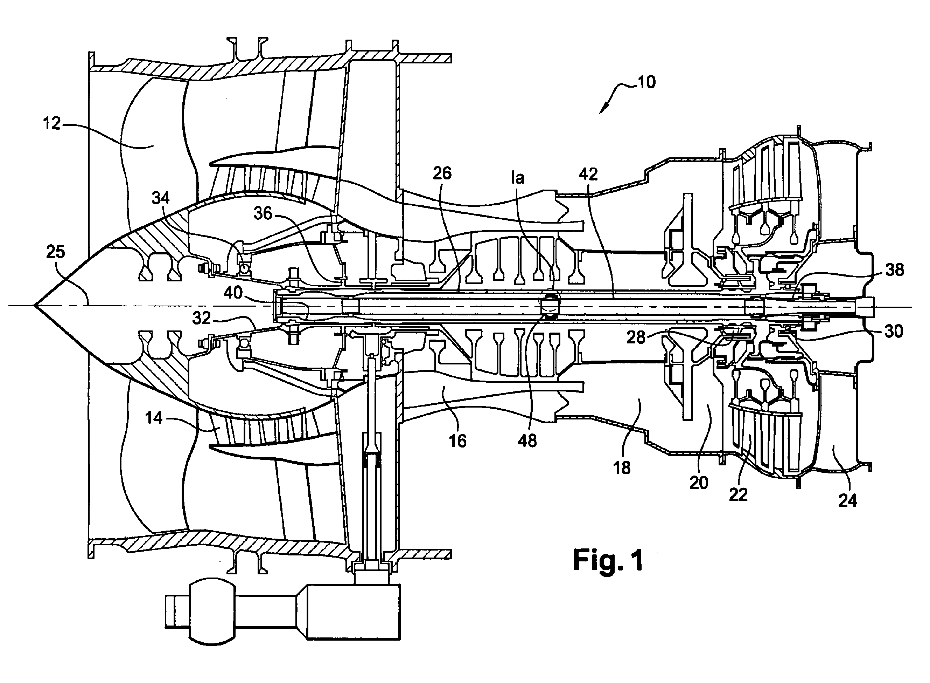

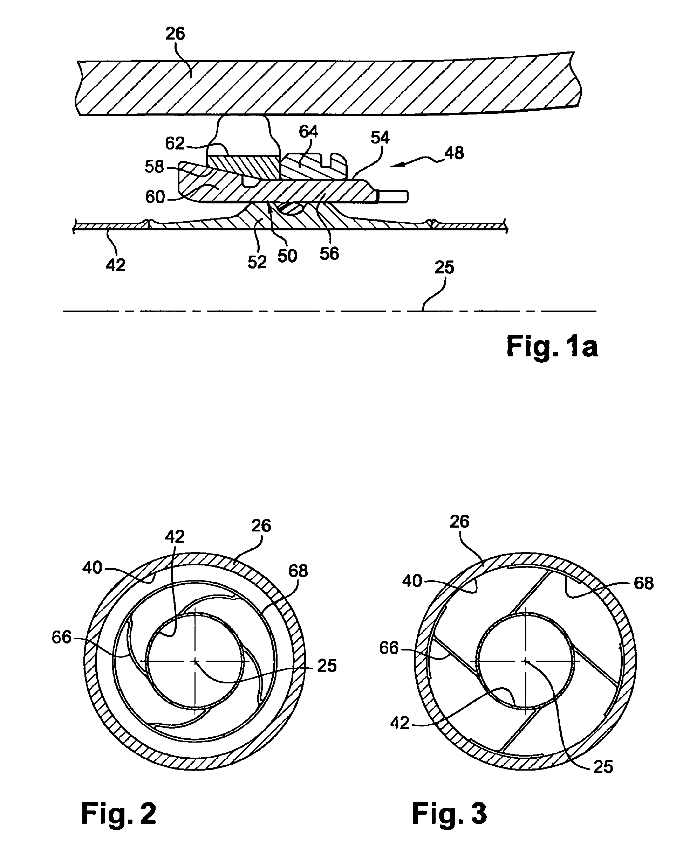

- la figure 1 est une vue schématique en coupe axiale d'une turbomachine d'un type connu ;
- la figure 1 a est une vue agrandie du détail la de la figure 1 ;
- les figures 2 et 3 sont des vues schématiques partielles en coupe transversale à plus grande échelle d'un arbre de compresseur basse pression dans une turbomachine comprenant un dispositif de centrage selon un premier mode de réalisation de l'invention, respectivement en position de rétraction et de déploiement ;
- les figures 4 et 5 sont respectivement des vues semblables aux figures 2 et 3, d'un dispositif de centrage selon un deuxième mode de réalisation de l'invention ;
- les figures 6 et 7 sont respectivement des vues semblables aux figures 2 et 3, d'un dispositif de centrage selon un troisième mode de réalisation de l'invention.

La figure 1 représente un turboréacteur d'avion 10 à double flux d'un type connu, comprenant essentiellement, de l'amont vers l'aval, une soufflante 12, un compresseur basse-pression 14, un compresseur haute-pression 16, une chambre de combustion s'étendant dans un espace annulaire 18, une turbine haute-pression 20, une turbine basse-pression 22 et un carter d'échappement 24.

En fonctionnement, et de manière bien connue, le rotor de la turbine basse-pression 22 entraîne en rotation autour d'un axe 25 du turboréacteur un arbre 26 guidé à l'aval par deux paliers 28 et 30 et entouré à l'amont par un arbre 32 guidé par deux paliers 34 et 36 et relié à la soufflante 12 et au compresseur basse-pression 14, l'arbre 26 de la turbine basse-pression 22 étant solidaire en rotation de l'arbre 32 de la soufflante 12 et du compresseur basse-pression 14 pour l'entraînement de ces derniers en rotation.

L'arbre 26 de la turbine basse-pression s'étend du compresseur basse-pression 14 à la turbine basse-pression 22, et est prolongé vers l'aval par une canule 38 dont l'extrémité aval est portée par le carter d'échappement 24.

Par ailleurs, l'arbre 26 de la turbine basse-pression est creux et a une surface interne 40 profilée pour optimiser les performances dynamiques du turboréacteur.

Le turboréacteur 10 comprend un tube 42, parfois appelé tube « center vent », qui est logé à l'intérieur de l'arbre 26 de la turbine basse-pression pour permettre la mise à l'air libre des paliers amont 34, 36 et aval 28, 30.

Ce tube 42 est solidarisé en rotation à l'arbre 26 de la turbine basse-pression à son extrémité amont, et à la canule 38 solidaire de l'arbre 26 à son extrémité aval.

Du fait de sa longueur et de sa faible raideur, en raison de la minceur relative de sa paroi, ce tube 42 présente des risques de flexion à l'intérieur de l'arbre 26 de la turbine basse-pression, susceptibles d'engendrer un balourd pénalisant les performances du turboréacteur 10.

Pour éviter ces risques de flexion, le tube 42 porte un dispositif de centrage 48 d'un type connu situé dans une zone médiane du tube 42, sensiblement à égale distance des extrémités du tube, et destiné à centrer le tube 42 à l'intérieur de l'arbre 26.

Comme le montre la figure 1 a, le dispositif de centrage 48 comporte une bague 50 montée autour d'une saillie annulaire externe 52 de la paroi du tube 42, cette bague 50 présentant un filetage externe 54 à son extrémité aval 56 et une paroi externe tronconique 58 à section se réduisant vers l'aval à son extrémité amont 60.

Un anneau élastique fendu 62 à paroi interne tronconique est monté autour de la paroi tronconique 58 de la bague 50, et est retenu axialement par un écrou 64 comprenant un filetage interne adapté au filetage 54 de la bague.

Le montage de cet anneau élastique 62 requiert un glissement de l'anneau autour de la bague 50 par l'extrémité aval 56 de cette dernière en l'absence de l'écrou 64, puis un vissage de l'écrou 64 autour du filetage externe 54 de la bague de manière à faire progresser l'anneau 62 vers l'amont autour de la paroi externe tronconique 58 de la bague et à provoquer ainsi une expansion de l'anneau 62.

L'anneau 62 présente par exemple une surface périphérique à section sensiblement carrée munie de coins arrondis dont la courbure est adaptée à la paroi interne 40 de l'arbre 26 de la turbine basse-pression, de sorte que l'expansion de l'anneau 62 entraîne un appui progressif des coins de l'anneau contre la surface interne de l'arbre 26, ce qui tend à centrer le tube 42 par rapport à l'arbre 26.

Le montage de l'anneau 62 doit être effectué après le positionnement du tube 42 à l'intérieur de l'arbre 26 de la turbine basse-pression, pour permettre le passage du tube 42 dans les zones de l'arbre de diamètre interne plus faible que celui de la zone médiane destinée à porter le dispositif de centrage 48.

De ce fait, le montage de l'anneau 62 s'avère délicat et requiert l'utilisation d'outils spécifiques permettant la mise en place de l'anneau 62 et le vissage de l'écrou 64 à l'intérieur de l'arbre 26 et à distance des extrémités de ce dernier.

En outre, le dispositif de centrage 48 décrit précédemment se révèle trop encombrant pour pouvoir être utilisé dans des moteurs de petite taille, tels que des moteurs ayant une soufflante de diamètre inférieur à quarante pouces, c'est-à-dire à un mètre environ.

Pour s'affranchir de ces inconvénients, l'invention propose un dispositif de centrage capable de passer d'une conformation de rétraction, pour la mise en place du tube 42 à l'intérieur de l'arbre 26 de la turbine basse-pression, à une conformation de déploiement pour le centrage du tube 42 par rapport à l'arbre 26, sans requérir d'outil de montage spécifique, le dispositif présentant en outre un encombrement réduit le rendant compatible avec les moteurs de petite taille.

Pour cela, le dispositif de centrage proposé comprend des moyens déformables mettant à profit la capacité de certains matériaux, appelés couramment matériaux à mémoire de forme, à changer de forme sous l'effet d'un changement de température.

Dans un premier mode de réalisation de l'invention représenté sur les figures 2 et 3, les moyens déformables sont des tiges 66 réalisées dans un matériau à mémoire de forme susceptible de présenter un effet mémoire de forme simple, tel par exemple qu'un alliage de nickel et de titane, parfois appelé Nitinol.

Chaque tige 66 est sensiblement radiale ou inclinée en oblique par rapport à un rayon et a une extrémité radialement interne fixée à la surface externe du tube 42, par exemple par soudure ou brasure, et une extrémité radialement externe portant un patin d'appui 68 formé d'un secteur annulaire d'un matériau courant, tel que de l'acier, et destiné à être appliqué sur la surface interne 40 de l'arbre 26, le patin 68 étant fixé à la tige 66 également par soudure, brasure ou analogue.

Dans la conformation de rétraction représentée sur la figure 2, les extrémités radialement externes des tiges 66 sont incurvées vers l'intérieur de sorte que les patins 68 sont disposés à faible distance du tube 42 de manière adjacente et forment un anneau sensiblement continu.

Dans la conformation de déploiement représentée sur la figure 3, les tiges 66 sont droites de sorte que les patins d'appui 68 sont écartés du tube 42 et appliqués contre la paroi interne 40 de l'arbre 26 de la turbine basse-pression, de manière à assurer le centrage du tube 42 par rapport à l'arbre 26.

Le déploiement des tiges 66, depuis leur conformation de rétraction, s'effectue grâce à un effet mémoire de forme simple.

Les tiges 66 sont préalablement conformées en position de déploiement sous une température supérieure à une température de transition Tₜ du matériau à mémoire de forme de sorte que ce dernier se trouve en phase austénitique. Puis le dispositif de centrage 66, 68 est rétracté mécaniquement, par une poussée des patins d'appui 68 radialement vers l'intérieur, et cela sous une température inférieure à la température de transition Tₜ précitée, de sorte que le matériau à mémoire de forme se trouve alors en phase martensitique.

Le dispositif de centrage 66, 68 peut dès lors être monté sur le tube 42 à l'extérieur de l'arbre 26, et le tube 42 peut ensuite être mis en place à l'intérieur de l'arbre 26.

Il suffit alors, pour le centrage du tube 42, de porter les tiges 66 du dispositif de centrage à une température supérieure à la température de transition Tₜ en phase austénitique du matériau formant ces tiges, par exemple par l'envoi d'air chaud dans l'arbre 26, pour que ce matériau passe en phase austénitique et engendre la déformation des tiges 66 par effet mémoire de forme simple, jusqu'à ce qu'elles retrouvent leur forme initiale apprise en phase austénitique, correspondant à la conformation de déploiement du dispositif de centrage 66, 68.

Il est préférable que le matériau à mémoire de forme choisi pour former les tiges 66 ait une température de transition Tₜ suffisamment élevée, par exemple supérieure à 100°C, pour éviter les risques de déploiement intempestif du dispositif de centrage.

Le dispositif décrit ci-dessus est suffisamment compact, en position de rétraction, pour franchir les zones de l'arbre ayant un diamètre interne réduit, sans risquer d'endommager la paroi interne de l'arbre.

Ce dispositif peut en outre être utilisé sans risque dans des moteurs de petit diamètre.

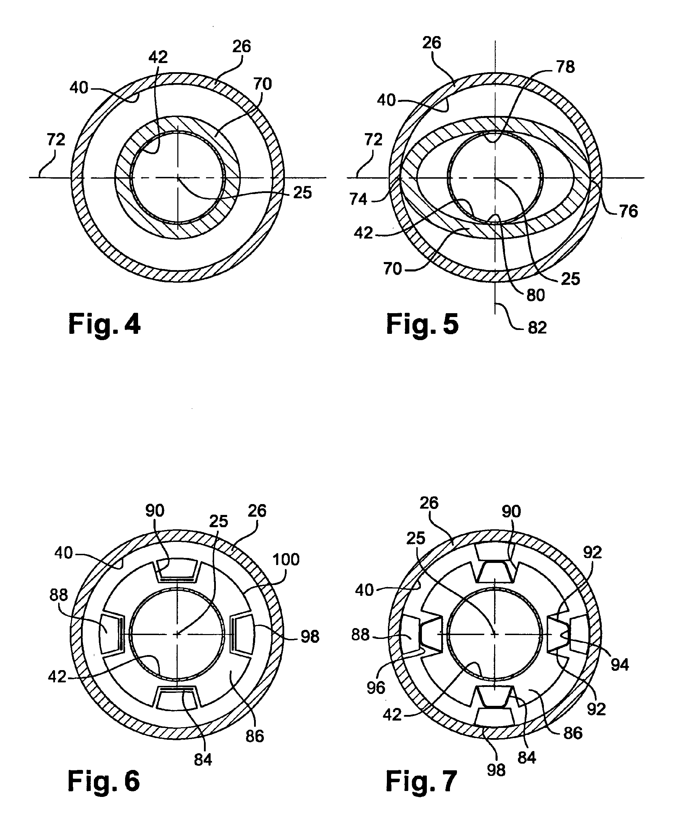

Les figures 4 et 5 représentent un deuxième mode de réalisation de l'invention, dans lequel les moyens déformables du dispositif de centrage comprennent une bague 70 réalisée dans un matériau à mémoire de forme susceptible de présenter un effet mémoire de forme double, tel qu'un alliage de type CuAlNi, CuZnAl, CuAlBe, NiTi ou encore NiTiNb, pour permettre à la fois le déploiement et la rétraction du dispositif par chauffage ou refroidissement de ce dernier.

Pour la mise en oeuvre de l'effet mémoire de forme double, la bague 70 subit au préalable une phase d'éducation comprenant une série de cycles thermomécaniques dans lesquels elle est alternativement conformée selon une géométrie circulaire, sous une température inférieure à la température de transition Tₜ du matériau à mémoire de forme en phase austénitique, de sorte que ce matériau se trouve alors en phase martensitique, et selon une géométrie ovale par allongement de la bague selon un plan 72 comprenant l'axe 25 de l'arbre 26, sous une température supérieure à la température de transition Tₜ du matériau à mémoire de forme, de sorte que ce matériau se trouve alors en phase austénitique.

La bague 70 peut ensuite être montée autour du tube 42.

La figure 4 représente le dispositif en conformation de rétraction, la bague 70 étant conformée selon sa géométrie circulaire pour entourer le tube 42 en présentant un encombrement radial réduit, de manière à permettre le passage du tube 42 au travers des resserrements de la paroi interne de l'arbre 26 sans risques pour ce dernier.

Le matériau à mémoire de forme composant la bague 70 a une température de transition Tₜ négative comprise entre -90°C et -50°C environ, pour éviter les risques de rétraction intempestive du dispositif tout en permettant une transition de phase dans des conditions industrielles.

Le passage du dispositif à sa conformation de rétraction représentée sur la figure 4 peut être déclenché par refroidissement de celui-ci en dessous de la température de transition Tₜ, par exemple par immersion du dispositif dans de l'azote liquide, qui peut être aisément introduit dans l'arbre 26.

La figure 5 représente le dispositif en conformation de déploiement, la bague 70 étant dans sa conformation ovale, de sorte que deux zones 74, 76 de sa surface externe, situées au voisinage du plan 72 d'allongement de la bague, sont appliquées contre la paroi interne 40 de l'arbre 26, tandis que deux zones 78, 80 de sa surface interne, qui sont situées au voisinage d'un plan 82 comprenant également l'axe de l'arbre 25 et perpendiculaire au plan 72 d'allongement de la bague, continuent d'être appliquées contre la paroi externe du tube 42.

Cette configuration permet ainsi un centrage du tube 42 par rapport à l'arbre 26.

Le passage du dispositif à cette conformation peut être déclenché par un retour du dispositif à une température supérieure à la température de transition Tₜ du matériau à mémoire de forme, par exemple par un simple retour à la température ambiante.

De cette façon, le dispositif reste déployé aux températures de fonctionnement du turboréacteur, sans risque de rétraction non souhaitée.

L'avantage de l'utilisation d'un effet mémoire de forme double réside dans la possibilité de déclencher la rétraction du dispositif de centrage lorsque celui-ci est monté à l'intérieur de l'arbre 26, par exemple pour une opération de maintenance, et ce par un simple refroidissement du dispositif.

En variante, la bague 70 peut avoir en conformation de déploiement une forme polygonale à sommets arrondis, ou toute géométrie équivalente de nature à permettre un appui de certaines parties externes de la bague 70 contre la surface interne 40 de l'arbre 26 tout en assurant un maintien du tube 42 en appui contre certaines parties internes de la bague 70.

Dans un troisième mode de réalisation représenté sur les figures 6 et 7, les moyens déformables comprennent des plaquettes 84 de matériau à mémoire de forme susceptible de présenter un effet mémoire de forme double, qui sont interposées entre une bague 86 et des patins d'appui 88.

La bague 86, qui est par exemple réalisée dans un matériau courant tel que de l'acier, comporte des parties creuses ou cuvettes 90 formées sur sa surface externe et régulièrement réparties autour de l'axe 25 de la bague, ces cuvettes 90 étant par exemple au nombre de quatre.

Chaque cuvette 90 est par exemple de forme tronconique à fond plat, et est destinée au logement d'un patin d'appui 88 de forme sensiblement conjuguée, réalisé par exemple dans un matériau analogue à celui de la bague 86, et d'une plaquette 84 en matériau à mémoire de forme interposée entre le patin d'appui 88 et le fond de la cuvette 90 et configurée pour pousser le patin d'appui 88 radialement vers l'extérieur lorsqu'elle est soumise à une température supérieure à la température de transition Tₜ du matériau à mémoire de forme, et pour rétracter le patin d'appui 88 radialement vers l'intérieur dans la cuvette 90 lorsqu'elle est soumise à une température inférieure à la température de transition Tₜ.

Pour la mise en oeuvre de l'effet mémoire de forme double, les plaquettes 84 subissent préalablement une phase d'éducation comprenant une série de cycles thermomécaniques dans lesquels chaque plaquette 84 est alternativement conformée selon une géométrie plate, sous une température inférieure à la température de transition Tₜ du matériau à mémoire de forme en phase austénitique, de sorte que ce matériau se trouve alors en phase martensitique, et selon une géométrie en arc, sous une température supérieure à la température de transition Tₜ, de sorte que le matériau à mémoire de forme se trouve alors en phase austénitique.

Les plaquettes 84 peuvent ensuite être installées entre les patins d'appui 88 et les fonds des cuvettes 90 de la bague 86, de sorte que deux bords opposés 92 de chaque plaquette 84 soient fixés au fond de la cuvette 90 correspondante, par exemple par brasure, soudure ou analogue, et qu'une zone médiane 94 de la surface radialement externe de chaque plaquette 84 soit fixée à une face radialement interne 96 du patin d'appui 88 correspondant, également par brasure, soudure ou analogue.

La figure 6 représente le dispositif en conformation de rétraction, les plaquettes 84 étant dans leur conformation plate de sorte que les patins d'appui 88 ne soient pas en contact avec la surface interne de l'arbre 26 et que l'encombrement radial du dispositif soit réduit au mieux. Dans l'exemple particulier représenté, la surface radialement externe 98 de chaque patin d'appui 88 affleure la surface externe 100 de la bague 86.

Le matériau à mémoire de forme utilisé ayant, comme dans l'exemple précédent, une température de transition Tₜ négative comprise entre -90°C et -50°C environ, pour éviter les risques de rétraction intempestive du dispositif, le passage du dispositif à la conformation de rétraction représentée sur la figure 6 peut être déclenché par immersion de ce dispositif dans de l'azote liquide ou analogue.

La figure 7 représente le dispositif en conformation de déploiement, les plaquettes 84 étant dans leur conformation en arc de sorte que la surface radialement externe 98 de chaque patin d'appui 88 soit appliquée contre la surface interne 40 de l'arbre 26 pour le centrage du tube 42.

Le passage du dispositif à cette conformation peut, comme dans l'exemple précédent, être déclenché par un retour à la température ambiante.

Les trois modes de réalisation décrits ci-dessus sont présentés à titre d'exemple non limitatif de l'invention, tant du point de vue de sa géométrie que de la mise en oeuvre des effets mémoire de forme simple et double.

En particulier, un effet mémoire de forme double du type décrit dans les deuxième et troisième modes de réalisation pourrait être combiné avec la géométrie du premier mode de réalisation pour en tirer les avantages décrits précédemment en termes de réversibilité, par exemple pour faciliter les opérations de maintenance. Cela nécessiterait bien entendu une étape d'éducation des tiges, analogue à ce qui a été décrit ci-dessus.

L'invention est applicable au centrage d'une pièce quelconque dans un tube ou un arbre creux et en particulier, mais non exclusivement au centrage d'un tube « center vent » dans un arbre creux de turbine d'une turbomachine.

## Revendications

1. Dispositif de centrage (66, 68, 70, 84, 86, 88) d'une pièce (42) à l'intérieur d'un arbre creux (26), en particulier dans une turbomachine (10), comprenant des moyens déformables (66, 70, 84) interposés entre la pièce (42) et l'arbre creux (26) et comportant des organes d'appui (68, 70, 88) sur la surface interne (40) de l'arbre (26), ces organes d'appui étant susceptibles d'être écartés de la surface interne de l'arbre pour permettre leur déplacement à l'intérieur de l'arbre, **caractérisé en ce que** les moyens déformables (66, 70, 84) sont réalisés, au moins partiellement, dans un matériau à mémoire de forme apte à se déformer pour appliquer les organes d'appui (68, 70, 88) sur la surface interne (40) de l'arbre (26) ou les en écarter lorsque le matériau est soumis à une température prédéterminée.

2. Dispositif selon la revendication 1, **caractérisé en ce que** les moyens déformables (66) sont préalablement conformés en position d'appui sur l'arbre (26) sous une température supérieure à une température Tₜ de transition du matériau à mémoire de forme puis sont rétractés sous contrainte mécanique à une température inférieure à la température de transition Tₜ, pour être ensuite capables, par un effet mémoire de forme simple, d'appliquer les organes d'appui (68) sur l'arbre (26) par déformation du matériau à mémoire de forme lorsque celui-ci est chauffé à une température supérieure à la température de transition Tₜ.

3. Dispositif selon la revendication 2, **caractérisé en ce que** la température de transition Tₜ du matériau à mémoire de forme est supérieure à 100°C.

4. Dispositif selon la revendication 1, **caractérisé en ce que** les moyens déformables (70, 84) sont préalablement soumis à des cycles thermomécaniques dans lesquels ils sont tour à tour conformés en position de déploiement à une température supérieure à une température Tₜ de transition du matériau à mémoire de forme puis en position de rétraction sous une température inférieure à la température de transition Tₜ, pour être ensuite aptes à appliquer les organes d'appui (70, 88) sur l'arbre creux (26) par déformation du matériau à mémoire de forme lorsque celui-ci est chauffé à une température supérieure à la température de transition Tₜ, et à rétracter les organes d'appui (70, 88) par déformation du matériau à mémoire de forme lorsque celui-ci est refroidi à une température inférieure à la température de transition Tₜ.

5. Dispositif selon la revendication 4, **caractérisé en ce que** la température de transition Tₜ est comprise entre -90°C et -50°C.

6. Dispositif selon l'une des revendications 1 à 5, **caractérisé en ce que** la pièce est un tube (42), tel qu'un conduit d'aération.

7. Dispositif selon la revendication 6, **caractérisé en ce que** les moyens déformables comprennent des tiges (66) de matériau à mémoire de forme ayant une extrémité radialement interne fixée à la surface externe du tube (42) et une extrémité radialement externe portant des patins d'appui (68) sur la surface interne (40) de l'arbre (26), l'extrémité radialement externe de chaque tige (66) étant susceptible d'être recourbée radialement vers l'intérieur par déformation du matériau à mémoire de forme pour écarter de la surface interne (40) de l'arbre (26) le patin d'appui (68) correspondant.

8. Dispositif selon la revendication 7, **caractérisé en ce que** chaque patin d'appui (68) a une forme de secteur d'anneau apte à épouser la forme de la surface interne (40) de l'arbre (26) en position de déploiement, l'ensemble des patins d'appui (68) formant, en position de rétraction, un anneau sensiblement continu entourant le tube (42).

9. Dispositif selon la revendication 6, **caractérisé en ce que** les moyens déformables comprennent une bague (70) de matériau à mémoire de forme montée autour du tube (42), et capable de prendre une forme ovale ou polygonale par déformation du matériau à mémoire de forme, de sorte qu'une partie (78, 80) de sa surface interne soit en appui sur la surface externe du tube (42) et qu'une partie (74, 76) de sa surface externe soit en appui sur la surface interne (40) de l'arbre (26) pour le centrage du tube (42).

10. Dispositif selon la revendication 6, **caractérisé en ce que** les moyens déformables comprennent une bague (86) montée autour du tube (42), et comportant des plaquettes (84) en matériau à mémoire de forme réparties autour de la bague (86), chaque plaquette (84) étant interposée entre la surface externe de la bague (86) et un patin d'appui (88) et étant capable de se fléchir en arc par déformation du matériau à mémoire de forme de sorte que des bords (92) de la plaquette (84) prennent appui sur la surface externe de la bague (86) et qu'une partie médiane (94) de la plaquette pousse le patin d'appui (88) radialement vers l'extérieur contre la surface interne (40) de l'arbre (26) pour le centrage du tube (42).

11. Dispositif selon la revendication 10, **caractérisé en ce que** la bague (86) comporte sur sa surface externe (100) des parties creuses (90) dans lesquelles reposent les plaquettes (84) en matériau à mémoire de forme et les patins d'appui (88).

12. Dispositif selon la revendication 11, **caractérisé en ce que** les patins d'appui (88) présentent une face radialement externe (98) qui affleure la surface externe (100) de la bague, en position de rétraction.

13. Turbomachine (10), telle qu'un turboréacteur d'avion, **caractérisée en ce qu'**elle comprend au moins un dispositif de centrage du type décrit dans l'une des revendications précédentes.

## Claims

1. A device (66, 68, 70, 84, 86, 88) for centering a part (42) inside a hollow shaft (26), in particular in a turbomachine (10), the device comprising deformable means (66, 70, 84) interposed between the part (42) and the hollow shaft (26) and including bearing members (68, 70, 88) for bearing against the inside surface (40) of the shaft (26), the bearing members being suitable for being spaced away from the inside surface of the shaft to enable them to be moved inside the shaft, the device being **characterized in that** the deformable means (66, 70, 84) are made at least in part out of a shape-memory material suitable for pressing the bearing members (68, 70, 88) against the inside surface (40) of the shaft (26), or for spacing them away therefrom when the material is subjected to a predetermined temperature.

2. A device according to claim 1, **characterized in that** the deformable means (66) are initially shaped into a position for bearing against the shaft (26) at a temperature higher than a transition temperature Tₜ of the shape-memory material, and are then retracted under mechanical stress at a temperature lower than the transition temperature Tₜ, so as to be capable subsequently, by a single shape-memory effect, of pressing the bearing members (68) against the shaft (26) by deformation of the shape-memory material when it is heated to a temperature higher than the transition temperature Tₜ.

3. A device according to claim 2, **characterized in that** the transition temperature Tₜ of the shape-memory material is higher than 100C°.

4. A device according to claim 1, **characterized in that** the deformable means (70, 84) are initially subjected to thermomechanical cycles in which they are shaped in turn in a deployment position at a temperature higher than a transition temperature Tₜ of the shape-memory material and then in a retraction position at a temperature that is lower than the transition temperature Tₜ, so as to be subsequently suitable for pressing the bearing members (70, 88) against the hollow shaft (26) by the shape-memory material deforming on being heated to a temperature higher than the transition temperature Tₜ, and for retracting the bearing members (70, 88) by the shape-memory material deforming on being cooled to a temperature lower than the transition temperature Tₜ.

5. A device according to claim 4, **characterized in that** the transition temperature Tₜ lies in the range -90° to -50°C.

6. A device according to any one of claims 1 to 5, **characterized in that** the part is a tube (42), such as a vent duct.

7. A device according to claim 6, **characterized in that** the deformable means comprise rods (66) of shape-memory material, each having a radially inner end fastened to the outside surface of the tube (42) and a radially outer end carrying a bearing shoe (68) for bearing against the inside surface (40) of the shaft (26), the radially outer end of each rod (66) being suitable for curving radially inwards by deformation of the shape-memory material in order to move the corresponding bearing shoe (68) away from the inside surface (40) of the shaft (26).

8. A device according to claim 7, **characterized in that** each bearing shoe (68) is in the form of a ring sector suitable for matching the shape of the inside surface (40) of the shaft (26) when in the deployed position, with the set of bearing shoes (68), when in the retracted position, forming a substantially continuous ring surrounding the tube (42).

9. A device according to claim 6, **characterized in that** the deformable means comprise a ring (70) of shape-memory material mounted around the tube (42) and capable of talcing up an oval or polygonal shape by deformation of the shape-memory material in such a manner that a portion (78, 80) of its inside surface bears against the outside surface of the tube (42) and a portion (74, 76) of its outside surface bears against the inside surface (40) of the shaft (26) in order to center the tube (42).

10. A device according to claim 6, **characterized in that** the deformable means comprise a ring (86) mounted around the tube (42) and including plates (84) of shape-memory material distributed around the ring (86), each plate (84) being interposed between the outside surface of the ring (86) and a bearing shoe (88), and being capable of bending into an arc by deformation of the shape-memory material such that the edges (92) of the plate (84) bear against the outside surface of the ring (86) and a middle portion (94) of the plate pushes the bearing shoe (88) radially outwards against the inside surface (40) of the shaft (26) in order to center the tube (42).

11. A device according to claim 10, **characterized in that** the ring (86) includes hollow portions (90) in its outside surface (100), with the plates (84) of shape-memory material and the bearing shoes (88) resting therein.

12. A device according to claim 11, **characterized in that** the bearing shoes (88) present respective radially outer faces (98) that are flush with the outside surface (100) of the ring, when in the retracted position.

13. A turbomachine (10) such as an airplane turbojet, **characterized in that** it includes at least one centering device of the type described in any preceding claim.

## Patentansprüche

1. Vorrichtung zum Zentrieren (66, 68, 70, 84, 86, 88) eines Teils (42) in Inneren einer Hohlwelle (26), insbesondere in einer Turbomaschine (10), mit verformbaren Mitteln (66, 70, 84), die zwischen das Teil (42) und die Hohlwelle gesetzt sind und Organe (68, 70, 88) zur Anlage an der Innenfläche (40) der Welle (26) aufweisen, wobei diese Anlageorgane von der Innenfläche der Welle entfernt werden können, um ihre Verschiebung im Inneren der Welle zu ermöglichen,
**dadurch gekennzeichnet,**
**dass** die verformbaren Mittel (66, 70, 84) wenigstens teilweise aus einem Formgedächtnismaterial hergestellt sind, das geeignet ist, sich zu verformen, um die Anlageorgane (68, 77, 88) an die Innenfläche (40) der Welle (26) zu drücken oder sie davon zu entfernen, wenn das Material einer vorbestimmten Temperatur unterworfen wird.

2. Vorrichtung nach Anspruch 1,
**dadurch gekennzeichnet,**
**dass** die verformbaren Mittel (66) vorher in der Anlageposition an der Welle (26) unter einer Temperatur gemessen werden, die höher als eine Übergangstemperatur Tₜ des Formgedächtnismaterials ist, dann unter mechanischer Beanspruchung auf eine Temperatur unter der Übergangstemperatur Tₜ zurückgezogen werden, um dann in der Lage zu sein, durch einen einfachen Formgedächtniseffekt die Anlageorgane (68) durch Verformung des Formgedächtnsmaterials an die Welle (26) zu drücken, wenn dieses auf eine Temperatur über der Übergangstemperatur Tₜ erwärmt wird.

3. Vorrichtung nach Anspruch 2,
**dadurch gekennzeichnet,**
**dass** die Übergangstemperatur Tₜ des Formgedächtnismaterials über 100°C liegt.

4. Vorrichtung nach Anspruch 1,
**dadurch gekennzeichnet,**
**dass** die verformbaren Mittel (70, 84) vorher thermomechanischen Zyklen unterworfen werden, bei denen sie wechselweise in Ausbreitungsposition auf eine Temperatur über einer Übergangstemperatur Tₜ des Formgedächtnismaterials angepasst werden, dann in Rückzugsposition unter einer Temperatur unter der Übergangstemperatur Tₜ, um dann dazu geeignet zu sein, die Anlageorgane (70, 88) durch Verformung des Formgedächtnismaterials an die Hohlwelle (26) zu drücken, wenn dieses auf eine Temperatur über der Übergangstemperatur Tₜ erwärmt wird, und die Anlageorgane (70, 88) durch Verformung des Formgedächtnismaterials zurückzuziehen, wenn dieses auf eine Temperatur unter der Übergangstemperatur Tₜ abgekühlt wird.

5. Vorrichtung nach Anspruch 4,
**dadurch gekennzeichnet,**
**dass** die Übergangstemperatur Tₜ zwischen -90°C und -50°C liegt.

6. Vorrichtung nach einem der Ansprüche 1 bis 5,
**dadurch gekennzeichnet,**
**dass** das Teil ein Rohr (42) wie eine Lüftungsleitung ist.

7. Vorrichtung nach Anspruch 6,
**dadurch gekennzeichnet,**
**dass** die verformbaren Mittel Stifte (66) auf Formgedächtnismaterial mit einem radial inneren, an der Außenfläche des Rohrs (42) befestigten Ende und einem radial äußeren Ende aufweisen, das Anlageklötze (68) an der Innenfläche (40) der Welle (26) trägt, wobei das radial äußere Ende jedes Stifts (66) in der Lage ist, durch Verformung des Formgedächtnismaterials radial nach innen gebogen zu werden, um von der Innenfläche (40) der Welle (26) den entsprechenden Anlageklotz (68) zu entfernen.

8. Vorrichtung nach Anspruch 7,
**dadurch gekennzeichnet,**
**dass** jeder Anlageklotz (68) eine Reifsektorfonn hat, die dazu geeignet ist, sich in der Ausbreitungsposition an die Form der Innenfläche (40) der Welle (26) anzuschmiegen, wobei die Einheit der Anlageklötze (68) in der zurückgezogenen Position einen im Wesentlichen kontinuierlichen Reif bilden, der das Rohr (42) umgibt.

9. Vorrichtung nach Anspruch 6,
**dadurch gekennzeichnet,**
**dass** die verformbaren Mittel einen um das Rohr (42) angebrachten Ring (70) aus Formgedächtnismaterial aufweisen, der in der Lage ist, durch Verformung des Formgedächtnismaterials derart eine ovale oder polygonale Form anzunehmen, dass ein Teil (78, 80) seiner Innenfläche an der Außenfläche des Rohrs (42) anliegt und dass ein Teil (74, 76) seiner Außenfläche an der Innenfläche (40) der Welle (26) zur Zentrierung des Rohrs (42) anliegt.

10. Vorrichtung nach Anspruch 6,
**dadurch gekennzeichnet,**
**dass** die verformbaren Mittel einen um das Rohr (42) angebrachten Ring (86) aufweisen, der um den Ring (86) verteilte Plättchen (84) aus Material mit Formgedächtnis aufweisen, wobei jedes Plättchen (84) zwischen die Außenfläche des Rings (86) und einen Anlageklotz (88) gesetzt und in der Lage ist, sich durch Verformung mit Formgedächtnis derart bogenförmig zu biegen, dass die Ränder (92) des Plättchens (84) an der Außenfläche des Rings (86) anliegen, und dass ein mittlerer Teil (94) des Plättchens den Anlageklotz (88) radial nach außen gegen die Innenfläche (40) der Welle (26) zur Zentrierung des Rohrs (42) schiebt.

11. Vorrichtung nach Anspruch 10,
**dadurch gekennzeichnet,**
**dass** der Ring (86) an seiner Außenfläche (100) hohle Teile (90) aufweist, in welchen die Plättchen (84) aus Formgedächtnismaterial und die Anlageklötze (88) ruhen.

12. Vorrichtung nach Anspruch 11,
**dadurch gekennzeichnet,**
**dass** die Anlageklötze (88) eine radial äußere Seite (98) aufweisen, welche die Außenfläche (100) des Rings in der Rückzugsposition leicht berührt.

13. Turbomaschine (10) wie ein Flugzeugstrahltriebwerk,
**dadurch gekennzeichnet,**
**dass** sie wenigstens eine Zentriervorrichtung des in einem der vorhergehenden Ansprüche beschriebenen Typs aufweist.
